# EUROPEAN PATENT APPLICATION

(11) **EP 1 785 804 A2**
(43) Date of publication of application: **16.05.2007**
(21) Application number: 06020291.8
(22) Date of filing: 27.09.2006
(51) Int. Cl.: G06F 1/16

(54) **Computer docking system and method**

(30) Priority: 25.10.2005 US 259157
(71) Applicant: Hewlett-Packard Development Company, L.P., Houston, TX 77070 (US)
(72) Inventor: Fry, Walter G., Houston, Texas 77070 (US); Zhang, Tim L., Houston, Texas 77070Hsinyi Trading Center, Taipei 110 (TW); Lakdawala, Rahul V., Houston, Texas 77070 (US); Crosswy, William Caldwell, Houston, Texas 77070 (US); Wagner, Matthew J., Houston, Texas 77070 (US); Lathrop, Frederick L., Houston, Texas 77070 (US)
(74) Representative: Schoppe, Fritz

(57) **Abstract**

A computer docking system (10) comprises a computer device (12) configured to be communicatively coupled to a dock (14), the computer device (12) and the dock (14) each comprising a processor (32, 52). The system (10) also comprises a switching fabric (60, 62) configured to enable the processor (52) of the dock (14) to access at least one resource (20) of the computer device (20).

## Description

### BACKGROUND OF THE INVENTION

Computer devices, such as notebook or laptop computers, tablet computers, etc., are generally favored because of their light weight and portability. However, to achieve light weight and portability of such computer devices, performance and/or battery life is generally compromised. For example, high performance processors generally consume more power, decrease battery life and generate more thermal energy, thereby requiring additional cooling devices, which add weight.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a computer docking system in accordance with the present invention; and

FIGURE 2 is a flow diagram illustrating an embodiment of a computer docking method in accordance with the present invention.

### DETAILED DESCRIPTION OF THE DRAWINGS

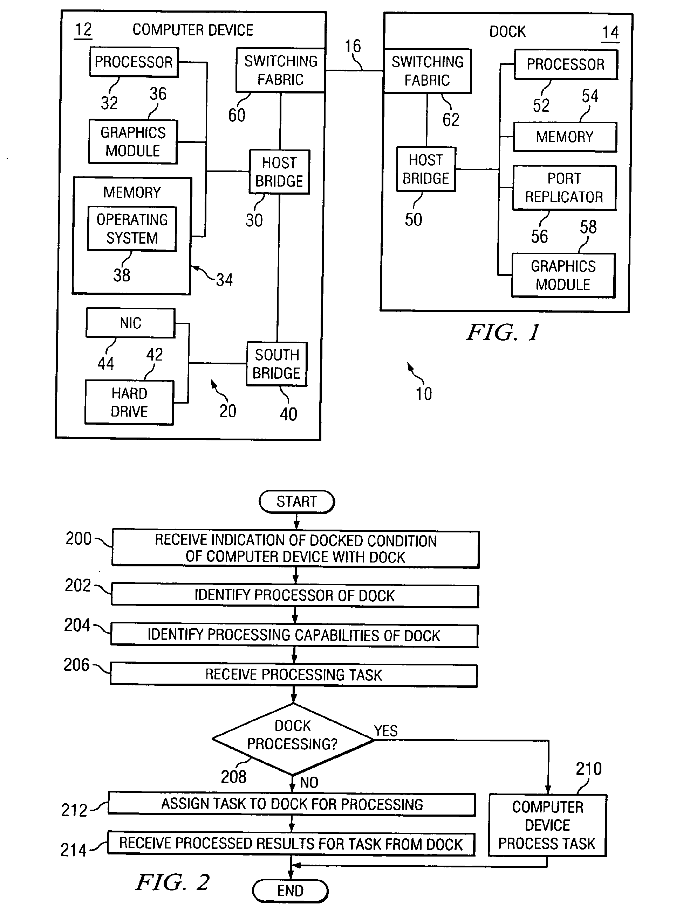

The preferred embodiments of the present invention and the advantages thereof are best understood by referring to FIGURES 1 and 2 of the drawings, like numerals being used for like and corresponding parts of the various drawings.

FIGURE 1 is a diagram illustrating an embodiment of a computer docking system 10 in accordance with the present invention. In the illustrated embodiment, system 10 comprises a computer device 12 communicatively couplable to a dock 14. Computer device 12 may comprise any type of computing device such as, but not limited to, a laptop or notebook computer, tablet computer, personal digital assistant or other type of handheld computer device. Computer device 12 is preferably coupled to dock 14 using a peripheral component interconnect express (PCIE) high-speed serial input/output (I/O) bus 16. However, it should be understood that computer device 12 may be otherwise communicatively coupled to dock 14.

In the embodiment illustrated in FIGURE 1, computer device 12 is configured having a number of different types of computer resources 20 for performing and/or otherwise facilitating access to various types of computer-related operations or tasks. For example, in the embodiment illustrated in FIGURE 1, computer device 12 comprises a host bridge 30 coupled to a processor 32, a memory 34, and a graphics module 36. In the embodiment illustrated in FIGURE 1, memory 34 comprises an operating system 38 accessible and executable by processor 32. In FIGURE 1, host bridge 30 is coupled to a south bridge 40, which in turn is coupled to a hard drive 42 and a network interface card (NIC) 44. In the embodiment illustrated in FIGURE 1, computer device 12 is configured having a PCIE architecture to communicatively couple resources 20 to each other and to other external devices or components. It should also be understood that computer device 12 may be configured having other and/or additional resources 20.

In the embodiment illustrated in FIGURE 1, dock 14 is configured having a PCIE architecture with a host bridge 50 communicatively coupled to a processor 52, a memory 54, a port replicator 56, and a graphics module 58. However, it should be understood that dock 14 may be configured having other and/or additional resources. Preferably, dock 14 is configured having functional capabilities greater than or supplemental to the computer-related capabilities of computer device 12 such that when computer device 12 is in a docked condition with dock 14, computer-related tasks and/or processing associated with computer device 12 is performed by dock 14. For example, in some embodiments of the present invention, computer device 12 is preferably configured to be lightweight and mobile. Thus, computer device 12 is preferably configured having lightweight, low power-consuming components that provide longer battery life and a lighter, thinner profile. Thus, in some embodiments of the present invention, processor 52 of dock 14 is configured having a processing level and/or capability greater than processor 32 of computer device 12, thereby enabling computer device 12 to be configured having lighter weight and decreased power consumption requirements. Accordingly, embodiments of the present invention are configured to facilitate performance of processing tasks of computer device 12 by processor 52 when computer device 12 is docked in dock 14.

In the embodiment illustrated in FIGURE 1, computer device 12 and dock 14 each comprise a switching fabric 60 and 62, respectively, configured as a packet-based transaction layer protocol operating over the PCIE bus 16 physical and data link layers. Switching fabrics 60 and 62 are configured to enable processors 32 and 52 to identify and/or otherwise access and communicate with resources of dock 14 and computer device 12, respectively. Thus, for example, switching fabrics 60 and 62 are configured to enable processor 52 to access and/or otherwise communicate with one or more resources 20 of computer device 12, and processor 32 to access and/or otherwise communicate with one or more resources of dock 14. Therefore, in some embodiments of the present invention, switching fabrics 60 and 62 are configured to enable processor 52 to access and/or otherwise communicate with one or more resources 20 of computer device 12 to perform various processing tasks associated with computer device 12 designated to dock 14 by computer device 12. Further, switching fabrics 60 and 62 are configured to enable processors 32 and 52 to operate at different clock speeds, thereby facilitating increased processing capabilities of dock 14 relative to computer device 12.

In the embodiment illustrated in FIGURE 1, operating system 38 of computer device 12 is configured as being multi-processor-capable such that operating system 38 identifies and/or otherwise recognizes multiple processors communicatively coupled thereto (e.g., processor 32 of computer device 12 and processor 52 of dock 14) for designating and/or otherwise causing various processing tasks to be performed by any of such processors 32 and 52 or a particular processor 32 or 52. Preferably, operating system 38 is configured to enable dynamic switching between processor 32 of computer device 12 and processor 52 of dock 14 for performing various processing tasks associated with computer device 12. For example, preferably, computer device 12 is configured such that, in response to computer device 12 being in a docked condition with dock 14, operating system 38 is configured to automatically assign all or particular processing tasks associated with computer device 12 to processor 52. Correspondingly, computer device 12 is preferably configured such that, in response to computer device 12 being undocked from dock 14, operating system 38 dynamically switches to processor 32 for performing various processing tasks associated with computer device 12.

Thus, in operation, in response to docking of computer device 12 with dock 14, operating system 38 receives an indication of a docked condition of computer device 12 (e.g., a signal from dock 14, switching fabric 60 and/or otherwise). In response to receiving an indication of a docked condition of computer device 12 with dock 14, operating system 38 identifies and/or otherwise recognizes available resources of dock 14 for performing various processing tasks associated with computer device 12 (e.g., processor 52). Preferably, in response to docking of computer device 12 with dock 14, operating system 38 is configured to dynamically switch from processor 32 to processor 52 for performing all or particular processing tasks associated with computer device 12. For example, in the embodiment illustrated in FIGURE 1, computer device 12 and dock 14 each comprise a graphics module 36 and 58, respectively, for performing various graphic-related functions. In the embodiment illustrated in FIGURE 1, dock 14 is configured having a graphics module 58 of relatively high processing capability to facilitate rendering and/or otherwise controlling graphic-intensive processing. As described above, graphics module 36 of computer device 12 is preferably configured having relatively low processing capabilities and/or power consumption needs to maintain a thin, lightweight and low power-consuming configuration of computer device 12.

Thus, in the above example, in response to a docked condition of computer device 12 with dock 14, operating system 38 is preferably configured to dynamically switch from graphics module 36 to graphics module 58 for processing various graphic-related tasks associated with computer device 12. Switching fabrics 60 and 62 enable graphics module 58 and/or processor 52 to access various resources 20 of computer device 12 to perform and/or otherwise carry out the designated processing tasks (e.g., access to memory 34, hard drive 42, etc.). Thus, for example, in operation, operating system 38 and/or graphics module 36 (e.g., by a driver or other software/hardware component of graphics module 36), designates and/or otherwise communicates with dock 14 for processing of a particular graphics-related task. In response, graphics module 58 and/or processor 52 accesses hard drive 42, memory 34 and/or other resources 20 of computer device 12 as needed to perform the designated processing task (e.g., retrieving an image model or other data from hard drive 42, memory 34 or elsewhere on computer device 12). Graphics module 58 controls processing and/or rendering of the graphics-related processing task and outputs such processing to computer device 12 (e.g., for display on a display element of computer device 12 or otherwise). Alternatively, graphics module 58 may output the results of the graphics-related processing to a display device communicatively coupled to dock 14 (e.g., the port replicator 56).

FIGURE 2 is a flow diagram illustrating an embodiment of a computer docking method in accordance with the present invention. The method begins at block 200, where computer device 12 receives an indication of a docked condition of computer device 12 with dock 14. At block 202, operating system 38 identifies processor 52 and/or other available resources of dock 14. At block 204, operating system 38 identifies the processing and/or other resource capabilities of dock 14. For example, in some embodiments of the present invention, operating system 38 is configured to communicate with dock 14 to identify clock speed levels and/or other characteristics associated with available resources of dock 14 (e.g., a clock speed and/or performance level associated with processor 52, graphics module 58 and/or other resources of dock 14).

At block 206, processor 32 and/or operating system 38 receives an indication and/or designation of a processing task to be performed associated with computer device 12. At decisional block 208, a determination is made whether to designate the processing task to dock 14. For example, in some embodiments of the present invention, operating system 38 is configured to dynamically switch to processor 52 of dock 14 for performing various processing tasks associated with computer device 12 in response to docking computer device 12 in dock 14. Such determination may be performed based on processor speed and/or capabilities of processor 52 relative to processor 32, resources of dock 14 unavailable and/or otherwise not provided on computer device 12, or otherwise.

As described above, in some embodiments of the present invention, computer device 12 is configured to automatically designate all or a portion of tasks associated with computer device 12 to dock 14 for processing in response to a docked condition of computer device 12 with dock 14. Thus, for example, if computer device 12 is in a docked condition with dock 14, or operating system 38 is otherwise configured to designate particular processing tasks to dock 14, the method proceeds to block 212, where operating system 38 and/or processor 32 assigns the particular processing task to dock 14. The method proceeds to block 214, where computer device 12 receives results associated with performing the processing task from dock 14. If at decisional block 208 it is determined that the particular task is not to be designated to dock 14, the method proceeds to block 210, where computer device 12 processes the particular task.

Thus, embodiments of the present invention provide a dock 14 having enhanced processing capabilities relative to a dockable computer device 12 such that, when computer device 12 is docked, computer device 12 is configured to automatically utilize the enhanced processing capabilities of the dock 14. Embodiments of the present invention provide dynamic switching of task processing between the computer device 12 and dock 14 and enable variable processor speeds to be utilized between computer device 12 and dock 14.

## Claims

1. A computer docking system (10), comprising:
a computer device (12) configured to be communicatively coupled to a dock (14), the computer device (12) and the dock (14) each comprising a processor (32, 52); and
a switching fabric (60, 62) configured to enable the processor (52) of the dock (14) to access at least one resource (20) of the computer device (12).

2. The system (10) of Claim 1, wherein the computer device (12) comprises an operating system (38) configured to dynamically switch between the processor (52) of the dock (14) and the processor (32) of the computer device (12) for performing task processing.

3. The system (10) of Claim 1, wherein the processor (52) of the dock (14) is configured having a processing capability greater than the processor (32) of the computer device (12).

4. The system (10) of Claim 1, wherein the switching fabric (60, 62) is configured to enable the processor (52) of the dock (14) to access a hard drive (42) of the computer device (12).

5. The system (10) of Claim 1, wherein the computer device (12) is communicatively coupled to the dock (14) by a peripheral component interconnect express (PCIE) serial input/output (I/O) bus (16).

6. The system (10) of Claim 1, wherein the computer device (12) is communicatively coupled to the dock (14) using a bus (16) enabling the processor (52) of the dock (52) to operate at a different clock speed than the processor (32) of the computer device (12).

7. A computer docking method, comprising:
detecting a docked condition of a computer device (12) with a dock (14), the computer device (12) and the dock (14) each having a processor (32, 52); and
enabling the processor (52) of the dock (14) to access at least one resource (20) of the computer device (12).

8. The method of Claim 7, further comprising dynamically switching between the processor (52) of the dock (14) and the processor (32) of the computer device (12) for performing task processing.

9. The method of Claim 7, further comprising enabling the processor (52) of the dock (14) to access a hard drive (42) of the computer device (12).

10. The method of Claim 7, further comprising enabling the processor (52) of the dock (14) to operate at a different clock speed than the processor (32) of the computer device (12).
